(19) Europäisches Patentamt
European Patent Office
Office européen des brevets

(11) **EP 4 618 023 A1**

(12) **EUROPEAN PATENT APPLICATION**
published in accordance with Art. 153(4) EPC

(43) Date of publication:
**17.09.2025 Bulletin 2025/38**

(21) Application number: **23915686.2**

(22) Date of filing: **02.11.2023**

(51) International Patent Classification (IPC):
***G06T 15/00*** (2011.01)

(52) Cooperative Patent Classification (CPC):
**G06T 15/00; G06T 15/50; Y02B 20/40**

(86) International application number:
**PCT/CN2023/129364**

(87) International publication number:
**WO 2024/148928 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.01.2023 CN 202310023904**

(71) Applicant: **Tencent Technology (Shenzhen)
Company Limited
Shenzhen, Guangdong 518057 (CN)**

(72) Inventor: **WANG, He
Shenzhen, Guangdong 518057 (CN)**

(74) Representative: **EP&C
P.O. Box 3241
2280 GE Rijswijk (NL)**

(54) **VOXEL-LIGHTING RENDERING METHOD AND APPARATUS, AND COMPUTER DEVICE AND STORAGE MEDIUM**

(57) This application relates to a virtual scene rendering method, which may be applied to the field of games, movies, virtual reality, and the like. The method includes: generating a surface element of each object in a virtual scene; obtaining a light probe in the virtual scene (S202); determining, from the surface element of each object, a target surface element of which a distance to each light probe satisfies a preset condition, and obtaining surface element lighting information of the target surface element, the surface element lighting information including direct lighting information and indirect lighting information, and the indirect lighting information being obtained by lighting accumulation of light scattered from the target surface element (S204); and performing virtual scene rendering on the object in the virtual scene based on the surface element lighting information (S206).

S202

Generate a surface element of each object in a virtual scene

S204

Obtain a light probe in the virtual scene, and obtain surface element lighting information of a target surface element of which a distance to the light probe satisfies a preset condition

S206

Perform global lighting rendering on the object in the virtual scene based on the surface element lighting information

FIG. 2

# EP 4 618 023 A1

**Description**

RELATED APPLICATION

This application claims priority to Chinese Patent Application No. 2023100239045, filed on January 9, 2023 and entitled "VIRTUAL SCENE RENDERING METHOD AND APPARATUS, COMPUTER DEVICE, AND STORAGE MEDIUM", which is incorporated herein by reference in its entirety.

FIELD OF THE TECHNOLOGY

This application relates to the field of image processing technologies, and in particular, to a virtual scene rendering method and apparatus, a computer device, and a storage medium.

BACKGROUND OF THE DISCLOSURE

In recent years, with the development of computer technologies, industries such as games, movies, and virtual reality show a booming development trend. A global lighting algorithm is widely used in high-realistic rendering of the foregoing scenes to produce an effect such as soft shadow, mutual reflection, caustic, and scattering.

However, there are problems of a large amount of calculation, poor real-time performance, and a poor rendering effect in a currently commonly used reflective shadow map (RSM)-based global lighting rendering solution and a voxel-based global lighting (Voxel Lighting) rendering solution.

SUMMARY

According to embodiments provided in this application, a virtual scene rendering method and apparatus, a computer device, and a storage medium are provided.

According to a first aspect, this application provides a virtual scene rendering method. The method includes:

generating at least one surface element for each of at least one object in a virtual scene, thereby generating a surface element set;

determining, from the surface element set, at least one target surface element for a target object of the at least one object, wherein a distance of each of the at least one target surface element to a corresponding one of at least one light probe in the virtual scene satisfies a preset condition; obtaining surface element lighting information of each of the at least one target surface element, the surface element lighting information comprising direct lighting information and indirect lighting information, and the indirect lighting information indicating lighting accumulation of projected light from respective one of the at least one target surface element; and

performing virtual scene rendering on the target object in the virtual scene based on the surface element lighting information of each of the at least one target surface element.

According to a second aspect, this application further provides a virtual scene rendering apparatus. The apparatus includes:

a surface element generating module, configured to generate at least one surface element for each of at least one object in a virtual scene, thereby generating a surface element set;

a lighting information obtaining module, configured to determine, from the surface element set, at least one target surface element for a target object of the at least one object, wherein a distance of each of the at least one target surface element to a corresponding one of at least one light probe in the virtual scene satisfies a preset condition; and obtain surface element lighting information of each of the at least one target surface element, the surface element lighting information comprises direct lighting information and indirect lighting information, and the indirect lighting information indicates lighting accumulation of light scattered from respective one of the at least one target surface element; and

a lighting rendering module, configured to perform virtual scene rendering on the target object in the virtual scene based on the surface element lighting information of each of the at least one target surface element.

According to a third aspect, this application further provides a computer device. The computer device includes a memory and a processor, and the memory has a computer program stored therein. The processor, when executing the computer program, implements the following operations:

generating at least one surface element for each of at least one object in a virtual scene, thereby generating a surface element set;

determining, from the surface element set, at least one target surface element for a target object of the at least one object, wherein a distance of each of the at least one target surface element to a corresponding one of at least one light probe in the virtual scene satisfies a preset condition; obtaining surface element lighting information of each of the at least one target surface element, the surface element lighting information comprising direct lighting information and indirect lighting information, and the indirect lighting information indicating lighting accumulation of light scattered from respective one of the at least one target surface element; and

performing virtual scene rendering on the target object in the virtual scene based on the surface element lighting information of each of the at least one target surface element.

According to a fourth aspect, this application further provides a computer-readable storage medium. The computer-readable storage medium has a computer program stored thereon. The computer program, when executed by a processor, implements the following operations:

generating at least one surface element for each of at least one object in a virtual scene, thereby generating a surface element set;

determining, from the surface element set, at least one target surface element for a target object of the at least one object, wherein a distance of each of the at least one target surface element to a corresponding one of at least one light probe in the virtual scene satisfies a preset condition; obtaining surface element lighting information of each of the at least one target surface element, the surface element lighting information comprising direct lighting information and indirect lighting information, and the indirect lighting information indicating lighting accumulation of light scattered from respective one of the at least one target surface element; and

performing virtual scene rendering on the target object in the virtual scene based on the surface element lighting information of each of the at least one target surface element.

According to a fifth aspect, this application further provides a computer program product. The computer program product includes a computer program. The computer program, when executed by a processor, implements the following operations:

generating at least one surface element for each of at least one object in a virtual scene, thereby generating a surface element set;

determining, from the surface element set, at least one target surface element for a target object of the at least one object, wherein a distance of each of the at least one target surface element to a corresponding one of at least one light probe in the virtual scene satisfies a preset condition; obtaining surface element lighting information of each of the at least one target surface element, the surface element lighting information comprising direct lighting information and indirect lighting information, and the indirect lighting information indicating lighting accumulation of light scattered from respective one of the at least one target surface element; and

performing virtual scene rendering on the target object in the virtual scene based on the surface element lighting information of each of the at least one target surface element.

Details of one or more embodiments of this application are provided in the accompanying drawings and descriptions below. Other features and advantages of this application become apparent from the specification, the accompanying drawings, and the claims.

BRIEF DESCRIPTION OF THE DRAWINGS

To describe the technical solutions in embodiments of this application or conventional technologies more clearly, the following briefly describes the accompanying drawings for describing embodiments or the conventional technologies. Apparently, the accompanying drawings in the following descriptions show merely embodiments of this application, and a person of ordinary skill in the art may still obtain other accompanying drawings from disclosed accompanying drawings without creative efforts.

FIG. 1 is a diagram of an application environment of a virtual scene rendering method according to an embodiment.

FIG. 2 is a schematic flowchart of a virtual scene rendering method according to an embodiment.

FIG. 3A is a visualized schematic diagram of surface elements according to an embodiment.

FIG. 3B is a schematic diagram of a scene picture according to an embodiment.

FIG. 3C is a schematic diagram of a surface element in a scene picture according to an embodiment.

FIG. 4 is a schematic diagram of distribution of light probes according to an embodiment.

FIG. 5 is a schematic diagram of a lighting rendering effect according to an embodiment.

FIG. 6 is a schematic diagram of a lighting rendering effect according to another embodiment.

FIG. 7 is a schematic diagram of a lighting rendering effect according to another embodiment.

FIG. 8 is a schematic diagram of light bouncing according to another embodiment.

FIG. 9 is a schematic flowchart of a virtual scene rendering method according to another embodiment.

FIG. 10 is a schematic diagram of a lighting rendering effect according to another embodiment.

FIG. 11 is a schematic diagram of a lighting rendering effect according to another embodiment.

FIG. 12 is a block diagram of a structure of a virtual scene rendering apparatus according to an embodiment.

FIG. 13 is a block diagram of a structure of a virtual scene rendering apparatus according to an embodiment.

FIG. 14 is a diagram of an internal structure of a computer device according to an embodiment.

FIG. 15 is a diagram of an internal structure of a computer device according to an embodiment.

DESCRIPTION OF EMBODIMENTS

The technical solutions in embodiments of this application are clearly and completely described below with reference to the accompanying drawings in embodiments of this application. Apparently, the described embodiments are merely some rather than all embodiments of this application. All other embodiments obtained by a person of ordinary skill in the art based on embodiments of this application without creative efforts shall fall within the protection scope of this application.

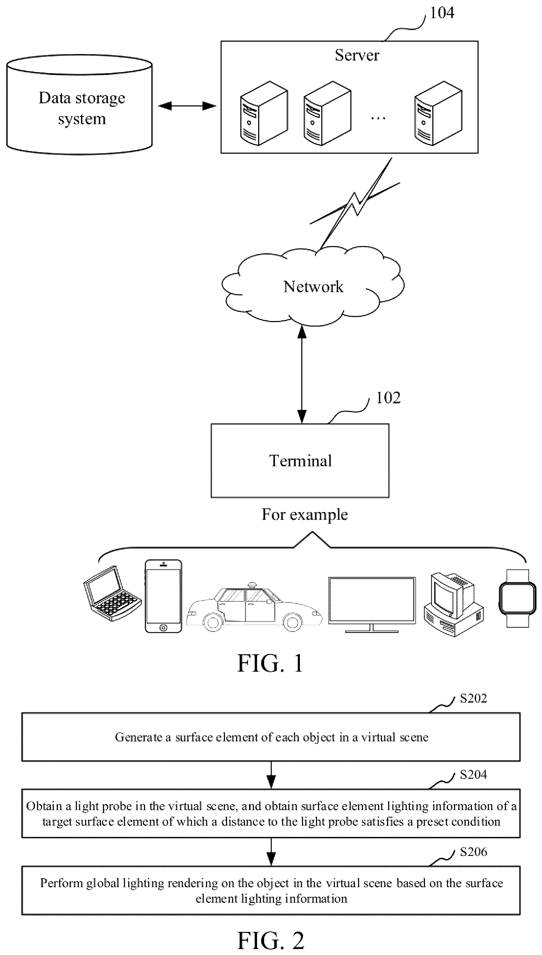

A real-time virtual scene rendering method provided in an embodiment of this application may be applied to an application environment shown in FIG. 1. A terminal 102 communicates with a server 104 through a network. A data storage system may store data that the server 104 needs to process. The data storage system may be integrated on the server 104, or placed on a cloud or another server. The virtual scene rendering method may be performed by the terminal 102 or the server 104, or may be performed jointly by the terminal 102 and the server 104. In some embodiments, the virtual scene rendering method is performed by the terminal 102. The terminal 102 generates a surface element of each object in a virtual scene; obtains a light probe in the virtual scene, and obtains surface element lighting information of a target surface element of which a distance to the light probe satisfies a preset condition, the target surface element being at least one of the surface element of each object, the surface element lighting information including direct lighting information and indirect lighting information, and the indirect lighting information being obtained by lighting accumulation of light scattered from the target surface element; and performs virtual scene rendering on the object in the virtual scene based on the surface element lighting information.

The terminal 102 may be, but is not limited to, a desktop computer, a notebook computer, a smartphone, a tablet, an internet of things device, or a portable wearable device. The internet of things device may be a smart speaker, a smart television, a smart air conditioner, a smart on-board device, or the like. The portable wearable device may be a smartwatch, a smart band, a head-mounted device, or the like. The server 104 may be an independent physical server, a server cluster or a distributed system including a plurality of physical servers, or a cloud server that provides basic cloud computing services such as a cloud service, a cloud database, cloud computing, a cloud function, cloud storage, a network service, cloud communication, a middleware service, a domain name service, a security service, CDN, big data, and an artificial intelligence platform. The terminal 102 and the server 104 may be directly or indirectly connected to each other in a wired or wireless communication manner. This is not limited in this application herein.

In an embodiment, as shown in FIG. 2, a virtual scene rendering method is provided. The method may be performed by the terminal 102 or the server 104 in FIG. 1, or may be performed jointly by the terminal 102 and the server 104. An example in which the method is performed by the terminal 102 in FIG. 1 is used for description. The method includes the following operations:

S202: Generate at least one surface element for each of at least one object in a virtual scene, thereby generating a surface element set. In embodiments of the present application, S202 can include following steps: generate a surface element of each object in a virtual scene.

The object in the virtual scene refers to a virtual object. The virtual scene refers to a digital scene drawn by a computer device through a digital communication technology. For example, in a three-dimensional virtual scene, a virtualization technology is used to realistically simulate various material forms, spatial relationships, and other information in the world. An object in the three-dimensional virtual scene may include at least one of terrain, a house, a tree, a person, or the like. All objects may be described by three-dimensional scene data. For example, the three-dimensional scene data may be loaded into the three-dimensional virtual scene to display a three-dimensional simulation environment. The three-dimensional scene data includes at least one of model data, texture data, lighting data, vector data, terrain data, raster data, or the like.

There is a light source in the virtual scene. The light source is a series of lighting data that can realistically simulate a lighting effect of a light source in reality. The light source may also be referred to as a virtual light source. The light source in reality refers to an object that can emit light on its own and is emitting light, such as the sun, an electric lamp, or a burning material. Different from the light source in reality, the light source in the virtual scene may be a virtual light source node without a shape or outline. A contrast in light and color between an illuminated object and a surrounding environment is made through lighting calculation of light distribution and color distribution on a surface of the illuminated object, so that a lighting effect of the object is shown based on the light source that is in the virtual scene. For example, the lighting effect of the illuminated object may be calculated based on a position of the light source in the virtual scene, but a viewer cannot see the light source.

In the virtual scene, propagation of light in an environment may be simulated to achieve a simulated global lighting effect. In global lighting, a bright surface and a dark surface of each object can be calculated, and various lighting effects such as reflection and refraction of light in the virtual environment can be calculated. Light may propagate in a straight line in a medium. When there is an obstacle such as an object during propagation, the light may be reflected, scattered, diffusely reflected, absorbed, or the like. Objects of different materials have different reflection rates of light on surfaces of the objects. For example, when light propagates to a mirror, the light may be reflected, and a reflection rate of the light is high. When light propagates to a table, the light may be diffusely reflected, and a reflection rate of the light is reduced. In addition, when the light source in the virtual scene changes, a global lighting effect in the virtual scene may also change accordingly.

A surface element is a small plane configured for describing a surface of an object, in other words, a smallest unit configured for describing a surface of an object. The surface element has a specific area and stores corresponding information of the surface of the object. The stored surface information may also be referred to as a surface element parameter. The surface element parameter may specifically include a position, a radius, a normal, and an albedo of the surface element.

Specifically, the terminal obtains the three-dimensional scene data of the virtual scene, and constructs the virtual scene based on the three-dimensional scene data, observes the virtual scene from a current camera perspective to obtain a scene picture, and generates, based on a deep shadow view and the scene picture, a surface element of each object matching the scene picture. The camera is an observation point in the entire virtual scene.

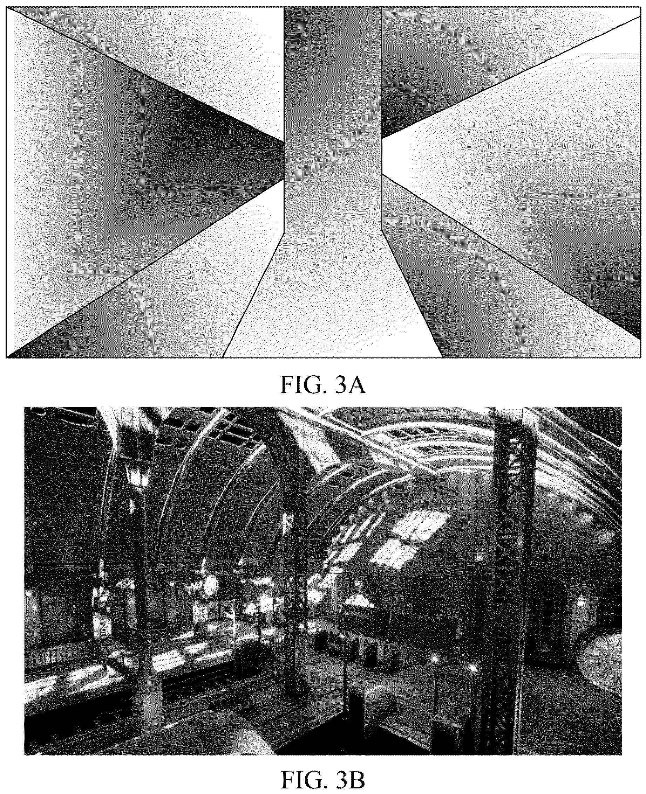

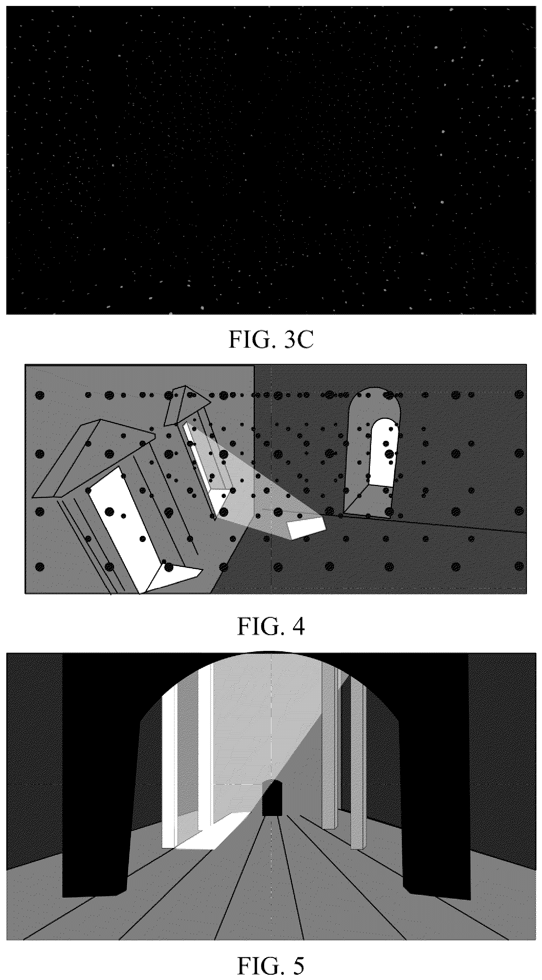

FIG. 3A is a schematic diagram of surface elements generated in a virtual scene in an embodiment. The surface elements in FIG. 3A are visualized using random colors. FIG. 3B is a schematic diagram of a scene picture of a virtual scene in an embodiment. FIG. 3C is a schematic diagram of surface elements generated corresponding to the scene picture. Each "point" in FIG. 3C is a surface element, and a size of the "point" does not represent a size of the surface element.

In an embodiment, after generating the surface element of each object, the terminal may further determine a surface element parameter of each surface element and store the surface element parameter of each surface element, to subsequently update or reclaim the surface element based on the stored surface element parameter. Therefore, there is no need to repeatedly generate a surface element that is on a surface of an object in the virtual scene, and it avoids using a surface element on a surface of an object not in the virtual scene for lighting rendering, so that rendering efficiency and a rendering effect of real-time virtual scene rendering for the virtual scene are improved.

In an embodiment, to facilitate management of the generated surface element, such as surface element update, surface element reclaim, or surface element traversal, the terminal may further generate a surface element identifier of each surface element when generating the surface element, obtain an object identifier of an object on whose surface the surface element is located, and establish a correspondence between the surface element identifier and the object identifier, to quickly find the surface element based on the correspondence, so as to update or reclaim the surface element. In addition, the terminal may further perform scene voxelization on the virtual scene, to be specific, divide entire space of the virtual scene into grids, and determine whether each grid is covered by the surface element. For any grid, a surface element identifier of a surface element covering the grid is obtained, and a corresponding surface element index is created based on the obtained surface element identifier, so that surface elements can be traversed subsequently by traversing each grid and further traversing each surface element index, thereby improving a speed of traversing surface elements, and further improving the rendering efficiency of real-time virtual scene rendering for the virtual scene.

S204: Determine, from the surface element set, at least one target surface element for a target object of the at least one object, wherein a distance of each of the at least one target surface element to a corresponding one of at least one light probe in the virtual scene satisfies a preset condition; obtain surface element lighting information of each of the at least one target surface element, the surface element lighting information comprising direct lighting information and indirect lighting information, and the indirect lighting information indicating lighting accumulation of light scattered from respective one of the at least one target surface element. In embodiments of the present application, light scattered from respective one of the at least one target surface element can be projected light from respective one of the at least one target surface element. In embodiments of the present application, S204 can include following steps: obtain a light probe in the virtual scene, determine, from the surface element of each object, a target surface element of which a distance to each light probe satisfies a preset condition, and obtain surface element lighting information of the target surface element, the surface element lighting information includes direct lighting information and indirect lighting information, and the indirect lighting information is obtained by lighting accumulation of light scattered from the target surface element.

In reality, light received by an object surface is not all from the light source, but also includes light reflected from another object. Light from the light source is direct light, and light from another object is indirect light. The global lighting effect includes a direct lighting effect and an indirect lighting effect, in other words, global lighting = direct lighting + indirect lighting.

Direct lighting refers to the brightness of light of which the light source directly irradiates on an object and is reflected to a virtual observation point or a camera. Indirect lighting refers to the brightness of light of which the light source first irradiates on another object, finally reaches, after one, two or more bounces, a surface of an observed object, and then is reflected to a virtual observation point or a camera.

A light probe is a light probe pre-placed in the virtual scene. The light probe may be alternatively understood as a three-dimensional sensing point that can sense information of light passing through the sensing point and can be configured for providing high-quality lighting information including indirect lighting for the object in the virtual scene. FIG. 4 shows distribution of light probes in a virtual scene in an embodiment. Dots represent light probes generated based on screen space. It can be learned from the figure that the light probes are evenly distributed in the virtual scene. In addition, the light probes may be alternatively generated based on world space. After probe lighting information at a position of each light probe is determined, lighting information of any point in the virtual scene can be obtained through interpolation based on probe lighting information of at least one light probe closest to the point.

The target surface element is at least one of the surface element of each object. The preset condition refers to a preset distance condition. For example, if the preset distance condition is less than a distance threshold, a surface element of which a distance to a specific light probe is less than the distance threshold is determined as the target surface element. A same light probe may correspond to a plurality of target surface elements.

The surface element lighting information refers to global lighting information of the surface element, and specifically includes direct lighting information and indirect lighting information. The indirect lighting information is obtained by lighting accumulation of light scattered from the target surface element. The light scattered from the target surface element refers to light projected outward from the target surface element, and may be alternatively referred to as light scattered. The lighting accumulation refers to accumulation of lighting effects of the light scattered of the target surface element on a surface of another object. In a real scene, indirect lighting information of a specific surface element is to be obtained by accumulating lighting effects of all light reaching the surface element after one or more reflections. To calculate indirect lighting information of the target surface element in this application, the following approximation strategy is used. Specifically, in the approximation strategy, reflected light reaching the target surface element is approximated to light emitted from the target surface element (that is, the light scattered). Therefore, lighting accumulation is performed on the light scattered of the target surface element, so that the indirect lighting information of the target surface element can be obtained. In this manner of determining the indirect lighting information, a calculation process can be simplified, the calculation process of the surface element lighting information is more efficient, so that efficiency of subsequent rendering is improved.

In addition, the indirect lighting information included in the surface element lighting information in this application may be at least one of primary indirect lighting information, secondary indirect lighting information, or multiple indirect lighting information. The primary indirect lighting information is lighting information generated by light being bounced once, the secondary indirect lighting information refers to lighting information generated by light being bounced twice, and the multiple indirect lighting information is lighting information generated by light being bounced a plurality of times.

In an embodiment, the terminal may obtain the light probe in the virtual scene, determine, from the surface element of each object, the target surface element of which a distance to the light probe satisfies the preset condition, and obtain the surface element lighting information of the target surface element.

Specifically, the terminal may pre-determine and store surface element lighting information of each surface element, and read pre-stored probe position information to obtain the light probe in the virtual scene. For any light probe, the terminal traverses each generated surface element, determines the target surface element of which a distance to the light probe satisfies the preset condition, and reads the surface element lighting information of the target surface element from the pre-stored surface element lighting information of each surface element.

S206: Perform virtual scene rendering on the target object in the virtual scene based on the surface element lighting information of each of the at least one target surface element. In embodiments of the present application, S206 can include following steps: perform global lighting rendering on the object in the virtual scene based on the surface element lighting information.

The terminal may render a series of scene pictures in the virtual scene, so that picture content in the virtual scene is displayed on a screen in the form of a two-dimensional image. In a computer graphic, rendering refers to a process of projecting an object model in a three-dimensional scene into a digital image in two dimensions based on a set environment, material, lighting, and rendering parameter. Lighting rendering refers to lighting calculation of each object in a to-be-rendered image during a rendering process, so that pixel points of a final object have a lighting effect.

In an embodiment, after obtaining the surface element lighting information of the target surface element corresponding to each light probe, the terminal may determine object lighting information of each object in the virtual scene based on the surface element lighting information of the target surface element corresponding to each light probe. For any object, virtual scene rendering may be performed on the object based on the object lighting information of the object.

In an embodiment, a process of determining the object lighting information of each object in the virtual scene based on the surface element lighting information of the target surface element corresponding to each light probe may include the following operations: determining probe lighting information at each light probe based on the obtained surface element lighting information of the target surface element, determining, for any object in the virtual scene, a target light probe of the object, and determining the object lighting information of the object based on the probe lighting information at the target light probe.

In an embodiment, a process of determining the object lighting information of each object in the virtual scene based on the surface element lighting information of the target surface element corresponding to each light probe may include the following operations: determining, for any object in the virtual scene, a target light probe corresponding to the object, determining, for any target light probe, probe lighting information at the target light probe based on the surface element lighting information of the target surface element corresponding to the target light probe, obtaining probe lighting information of each target light probe, and determining the object lighting information of the object based on the probe lighting information of each target light probe of the object.

The target light probe of the object refers to a light probe of which a distance to the object satisfies the preset condition.

For example, there are a light probe 1, a light probe 2, a light probe 3, and a light probe 4, and a surface element 1, a surface element 2, a surface element 3, a surface element 4, a surface element 5, and a surface element 6 in the virtual scene. The light probe 1, the light probe 2, and the light probe 3 are close to an object A in the virtual scene, a distance between the surface element 1 and the light probe 1, a distance between the surface element 2 and the light probe 1, and a distance between the surface element 3 and the light probe 1 satisfy the preset condition, a distance between the surface element 3 and the light probe 2, a distance between the surface element 4 and the light probe 2, and a distance between the surface element 5 and the light probe 2 satisfy the preset condition, a distance between the surface element 4 and the light probe 3, a distance between the surface element 5 and the light probe 3, and a distance between the surface element 6 and the light probe 3 satisfy the preset condition, and a distance between the surface element 5 and the light probe 4 and a distance between the surface element 6 and the light probe 4 satisfy the preset condition. Therefore, surface element lighting information of the surface element 1, surface element lighting information of the surface element 2, and surface element lighting information of the surface element 3 are obtained through the light probe 1, the surface element lighting information of the surface element 3, surface element lighting information of the surface element 4, and surface element lighting information of the surface element 5 are obtained through the light probe 2, the surface element lighting information of the surface element 4, the surface element lighting information of the surface element 5, and surface element lighting information of the surface element 6 are obtained through the light probe 3, and the surface element lighting information of the surface element 5 and the surface element lighting information of the surface element 6 are obtained through the light probe 4. Then, probe lighting information at the light probe 1 is determined based on the surface element lighting information of the surface element 1, the surface element lighting information of the surface element 2, and the surface element lighting information of the surface element 3, probe lighting information at the light probe 2 is determined based on the surface element lighting information of the surface element 3, the surface element lighting information of the surface element 4, and the surface element lighting information of the surface element 5, probe lighting information at the light probe 3 is determined based on the surface element lighting information of the surface element 4, the surface element lighting information of the surface element 5, and the surface element lighting information of the surface element 6, and probe lighting information at the light probe 4 is determined based on the surface element lighting information of the surface element 5 and the surface element lighting information of the surface element 6. When the object A in the virtual scene needs to be rendered, it is determined that target light probes of which distances to the object A satisfy the preset condition are the light probe 1, the light probe 2, and the light probe 3. Then, object lighting information of the object A is determined based on the probe lighting information at the light probe 1, the probe lighting information at the light probe 2, and the probe lighting information at the light probe 3, and virtual scene rendering is performed on the object A in the virtual scene based on the object lighting information of the object A.

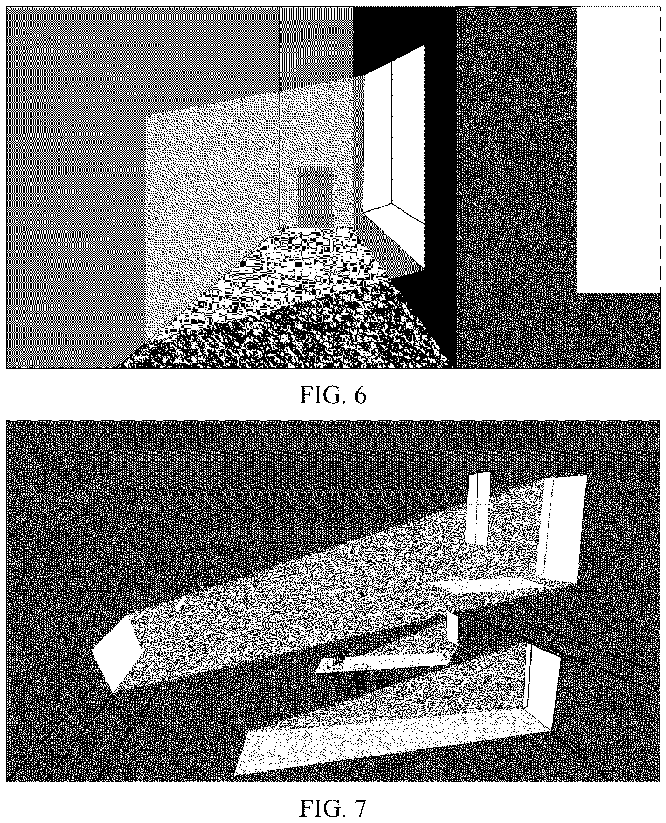

FIG. 5 shows a real-time lighting rendering effect of a virtual scene with sufficient light and small space in an embodiment. FIG. 6 shows a real-time lighting rendering effect of a virtual scene with sufficient light in another embodiment. FIG. 7 shows a real-time lighting effect of a virtual scene with less light in an embodiment. With reference to FIG. 5, FIG. 6, and FIG. 7, it can be learned that a good rendering effect for virtual scenes with sufficient light, less light, spacious space, or small space can be achieved by using the virtual scene rendering method of this application.

In the virtual scene rendering method, the surface element of each object in the virtual scene is generated, the light probe in the virtual scene is obtained, and the surface element lighting information of the target surface element of which the distance to the light probe satisfies the preset condition is obtained. The target surface element is at least one of the surface element of each object, the surface element lighting information includes the direct lighting information and the indirect lighting information, and the indirect lighting information is obtained by lighting accumulation of the light scattered from the target surface element. The indirect lighting information of the target surface element is calculated by approximating the reflected light reaching the target surface element to the light emitted from the target surface element (that is, the light scattered), so that the calculation process of the indirect lighting information is simplified, the calculation process of the surface element lighting information is more efficient, thereby improving the efficiency of subsequent rendering. In addition, after surface element lighting information of each target surface element is obtained, virtual scene rendering may be performed on the object in the virtual scene based on the surface element lighting information, in other words, ray tracing is performed in the form of a surface element, and light is collected in the form of a surface element. This further improves rendering efficiency compared to an existing voxel tracing-based rendering method. In addition, the approximate strategy of approximating the reflected light reaching the target surface element to the light emitted from the target surface element (that is, the light scattered) is more in line with a lighting condition in the real scene, and enhances realism of the rendering effect. Therefore, in the virtual scene rendering method, in addition that the rendering effect is improved, the rendering efficiency is further improved, so that efficient real-time virtual scene rendering is implemented.

In an embodiment, after obtaining the scene picture of the virtual scene, the terminal may further generate a deep shadow map of the virtual scene, and generate the surface element of each object in the virtual scene based on the generated deep shadow map, to ensure that each pixel point in the scene picture displayed in the virtual scene in screen space is covered by the surface element, and then ray tracing may be performed in the form of a surface element, and light may be collected in the form of a surface element, so that efficient real-time virtual scene rendering for the virtual scene is implemented.

The deep shadow map is a map that records a scene depth of the virtual scene from a perspective of a light source and is generally configured for shadow calculation, object culling, and occlusion calculation. The deep shadow map is a map for multi-channel calculation that uses a depth texture to provide a solution for a rendering shadow. A principle of the deep shadow map is to use a light source instead of a camera to observe the virtual scene. The camera is moved to a position of the light source, so that it can be observed that each object at the position is bright because there is no shadow from a perspective of light. The depth of the virtual scene is rendered into a map from a perspective of the light source, so that a shadow map can be obtained in the virtual scene.

In an embodiment, the terminal may alternatively obtain a scene picture of the virtual scene from a perspective of a camera, and generate the surface element of each object in the virtual scene based on the scene picture, so that it can be ensured that each pixel point in the scene picture displayed in the virtual scene in screen space is covered by the surface element, and then ray tracing may be performed in the form of a surface element, and light may be collected in the form of a surface element, thereby implementing efficient real-time virtual scene rendering for the virtual scene.

In an embodiment, a process of generating the deep shadow map in the virtual scene rendering method specifically includes the following operations: obtaining light source information of a virtual light source in the virtual scene; and generating the deep shadow map of the virtual scene based on the light source information, to subsequently generate the surface element based on the generated deep shadow map. Then ray tracing is performed in the form of a surface element, and light is collected in the form of a surface element, so that efficient real-time virtual scene rendering for the object in the virtual scene is implemented.

The light source information refers to related information of the virtual light source in the virtual scene, and includes a position and a lighting parameter of the light source. The lighting parameter includes a lighting transmission vector, lighting intensity, and another parameter.

Specifically, after obtaining the position of the light source form the light source information, the terminal observes the virtual scene from the perspective of the light source, obtains the minimum surface distance from a surface of each object to the light source, and stores the obtained minimum surface distance on the map, then determines a distance from the surface of each object in the virtual scene observed from the perspective of the camera to the light source, to determine whether the surface of each object is in a shadow, generates the deep shadow map of the virtual scene, to subsequently generate the surface element based on the generated deep shadow map, and then performs efficient real-time virtual scene rendering on the object in the virtual scene based on the surface element. The minimum surface distance refers to a distance from a point at which light from the light source intersects the surface of the object to the light source.

In an embodiment, the surface element generated by the terminal based on the deep shadow map includes an initial surface element and an incremental surface element. A process of the terminal generating the surface element based on the generated deep shadow map specifically includes the following operations: dividing the deep shadow map into tiles to obtain deep shadow map tiles; selecting an initial pixel point in each deep shadow map tile, and generating the initial surface element at a position of the initial pixel point; determining, in each deep shadow map tile, first coverage of each pixel point by the initial surface element; and generating, when a first target pixel point of which the first coverage is less than a coverage threshold exists in pixel points, the incremental surface element at a position of the first target pixel point. This ensures that each pixel point in the scene picture displayed in the virtual scene in screen space is covered by the surface element, and then ray tracing is performed in the form of a surface element, and light is collected in the form of a surface element, so that efficient real-time virtual scene rendering for the object in the virtual scene is implemented.

The pixel point may refer to a center position of a pixel. A pixel may be a region in the form of a small square. A small square may correspondingly represent a pixel, and a center of the pixel is the pixel point. An image is usually formed by a plurality of pixels, and the deep shadow map generated in this application is also formed by a plurality of pixels, in other words, the deep shadow map includes a plurality of pixel points, and the first coverage refers to coverage of the pixel points in the deep shadow map tile by the surface element. The surface element has a specific area, and each surface element may cover at least one pixel point. For example, if a pixel point is covered by three initial surface elements at the same time, the first coverage of the pixel point is 3, and the three initial surface elements are three surface elements at different positions.

Specifically, after obtaining the deep shadow map, the terminal obtains a preset tile size, and divides the deep shadow map into tiles according to the preset tile size to obtain a plurality of deep shadow map tiles. For any deep shadow map tile, at least one initial pixel point is selected from the deep shadow map tile at an initial moment, and the initial surface element is generated at the selected at least one initial pixel point, and then each pixel point on the deep shadow map tile is traversed to determine the first coverage of each pixel point by the initial surface element, and each obtained first coverage is compared with the preset coverage threshold to determine whether there is the first target pixel point of which the first coverage is less than the coverage threshold. If there is the first target pixel point of which the first coverage is less than the coverage threshold, a deep shadow map tile to which the first target pixel pint belongs is determined as a target deep shadow map tile, and the incremental surface element is generated at the position of the first target pixel point in the target deep shadow map tile, to ensure that each pixel point in the deep shadow map is covered by a specific quantity of surface elements, so that it is ensured that each pixel point in the scene picture displayed in the virtual scene in the screen space is covered by a specific quantity of surface elements. When rendering the object in the virtual scene based on the surface element, lighting information of each pixel point of the object can be determined based on the surface element lighting information of the surface element, thereby implementing lighting rendering for each object, and avoiding a poor final rendering effect due to low surface element coverage of some specific pixel points in the object.

In an embodiment, the terminal compares each obtained first coverage with the preset coverage threshold to determine that there is the first target pixel point of which the first coverage is less than the coverage threshold. When there are two or more first target pixel points, first coverage of the first target pixel points may be further compared, a position of a first target pixel point with the smallest first coverage value is determined as a target position, and the incremental surface element is generated at the target position. This can ensure that each pixel point in the deep shadow map is covered by a specific quantity of surface elements and avoid generating too many redundant surface elements, so that calculation efficiency of a lighting rendering process is improved, thereby further improving the rendering efficiency.

For example, the deep shadow map of the virtual scene generated by the terminal is m×m, m is greater than 8, and the obtained preset tile size is 8×8. Then the terminal divides each 8×8 pixels in the deep shadow map into a deep shadow map tile, and obtains a deep shadow map tiles. For any deep shadow map tile, 10 initial pixel points are randomly selected from the deep shadow map tile at the initial moment, and the initial surface elements are generated at the 10 initial pixel points. Then, the first coverage of each pixel point of 64 pixel points by the surface element is determined, the surface element coverage of each pixel point is compared with the preset surface element coverage threshold, and it is determined that there is the first target pixel point of which the first coverage is less than the coverage threshold, and the incremental surface element is generated at the first target pixel point. In addition, after determining the first coverage of each pixel point of the 64 pixel points by the surface element, the terminal may alternatively directly sort the first coverage of the 64 pixel points, then determine a minimum value of the first threshold coverage, and compare the minimum value with the preset surface element coverage threshold. If the minimum value is less than the preset surface element coverage threshold, the incremental surface element is generated at the first target pixel point corresponding to the minimum value. If the minimum value is not less than the preset surface element coverage threshold, generation of the incremental surface element is stopped. This can ensure that each pixel point in the deep shadow map is covered by a specific quantity of surface elements, and avoid generating too many redundant surface elements, so that the calculation efficiency of the lighting rendering process is improved, thereby further improving the rendering efficiency.

In an embodiment, after generating the incremental surface element at the position of the first target pixel point, the terminal may further determine whether it is needed to continue to generate the incremental surface element. The specific process is as follows: determining, in each deep shadow map tile, second coverage of each pixel point by the surface element; generating, when a second target pixel point of which the second coverage is less than the coverage threshold exists in the pixel points, a new incremental surface element at a position of the second target pixel point; or stopping generating a new incremental surface element when a second target pixel point of which the second coverage is less than the coverage threshold does not exist in the pixel points. This can ensure that each pixel point in the deep shadow map is covered by a specific quantity of surface elements, and avoid generating too many redundant surface elements, so that the calculation efficiency of the lighting rendering process is improved, thereby further improving the rendering efficiency.

The second surface element coverage refers to coverage of the pixel point by the initial surface element and the incremental surface element.

Specifically, for any deep shadow map tile, each pixel point on the deep shadow map tile is traversed to determine the second surface element coverage of each pixel point by the initial surface element and the incremental surface element, and the obtained second surface element coverage is compared with the preset coverage threshold to determine whether there is the second target pixel point of which the second coverage is less than the coverage threshold. If there is the second target pixel of which the second coverage is less than the coverage threshold, a deep shadow map tile to which the second target pixel point belongs is determined as the target deep shadow map tile, and the new incremental surface element is generated at the position of the second target pixel point in the target deep shadow map tile. This can ensure that each pixel point in the deep shadow map is covered by a specific quantity of surface elements and avoid generating too many redundant surface elements, so that calculation efficiency of a lighting rendering process is improved, thereby further improving the rendering efficiency.

In an embodiment, the surface element of each object in the virtual scene generated by the terminal based on the scene picture in the perspective of the camera includes an initial surface element and an incremental surface element. To distinguish the initial surface element and the incremental surface element from the initial surface element and the incremental surface element generated by the terminal based on the deep shadow map tile, the initial surface element generated based on the deep shadow map tile is referred to as a first initial surface element, the incremental surface element generated based on the deep shadow map tile is referred to as a first incremental surface element, the initial surface element generated based on the scene picture in the perspective of the camera is referred to as a second initial surface element, and the incremental surface element generated based on the scene picture in the perspective of the camera is referred to as a second incremental surface element. A process of the terminal generating the surface element of each object in the virtual scene based on the scene picture in the perspective of the camera includes the following operations: dividing the scene picture into tiles to obtain scene picture tiles; selecting an initial pixel point in each scene picture tile, and generating the second initial surface element at a position of the initial pixel point; determining, in each scene picture tile, third coverage of each pixel point by the second initial surface element; and generating, when a third target pixel point of which third coverage is less than the coverage threshold exists in the virtual scene picture tiles, the second incremental surface element at a position of the third target pixel point. This ensures that each pixel point in the scene picture displayed in the virtual scene in the screen space is covered by a specific quantity of surface elements. When rendering the object in the virtual scene based on the surface element, lighting information of each pixel point of the object can be determined based on the surface element lighting information of the surface element, thereby implementing lighting rendering for each object, and avoiding a poor final rendering effect due to low surface element coverage of some specific pixel points in the object. In this way, realism of the rendering effect is improved.

In an embodiment, the terminal compares each obtained third coverage with the preset coverage threshold to determine that there is the third target pixel point of which the third coverage is less than the coverage threshold. When there are two or more third target pixel points, third coverage of the third target pixel points may be further compared, a position of a third target pixel point with the smallest third coverage value is determined as a target position, and the second incremental surface element is generated at the target position. This can ensure that each pixel point in the scene picture is covered by a specific quantity of surface elements and avoid generating too many redundant surface elements, so that calculation efficiency of a lighting rendering process is improved, thereby further improving the rendering efficiency.

In an embodiment, after generating the second incremental surface element at the position of the third target pixel point, the terminal may further determine whether it is needed to continue to generate a new second incremental surface element. The specific process is as follows: determining, in each scene picture tile, fourth coverage of each pixel point by the surface element; generating, when a fourth target pixel point of which fourth coverage is less than the coverage threshold exists in the virtual scene picture tiles, the second incremental surface element at a position of the fourth target pixel point; or stopping generating a new second incremental surface element when the fourth target pixel point of which the fourth coverage is less than the coverage threshold does not exist in the virtual scene picture tiles. This can ensure that each pixel point in the scene picture is covered by a specific quantity of surface elements, and avoid generating too many redundant surface elements, so that the calculation efficiency of the lighting rendering process is improved. The fourth coverage refers to coverage of the pixel point by the second initial surface element and the second incremental surface element.

In an embodiment, after generating the surface element, the terminal may further determine and store the surface element lighting information of each surface element, to collect the surface element lighting information of the target surface element by using the light probe. A process of determining the surface element lighting information of each surface element includes: determining a surface element parameter of each surface element; generating the deep shadow map based on the light source information of the virtual light source in the virtual scene; and determining the surface element lighting information of each surface element based on the deep shadow map and the surface element parameter. In this way, based on the surface element lighting information of each surface element, ray tracing may be performed in the form of a surface element, and light may be collected in the form of a surface element, thereby implementing efficient real-time virtual scene rendering for the virtual scene.

The surface element parameter includes a surface element position, a normal, an albedo, and the like. The albedo (also known as reflectivity) is a physical quantity that represents a degree of reflection of light on a surface of an object. The albedo is a ratio of energy of light reflected from the surface of the object to energy of light incident on the surface of the object. The albedo may be configured for representing an optical property of the surface of the object, such as an object color, a degree of diffuse reflection, and a degree of specular reflection. The surface element position may be specifically coordinates of the surface element.

Specifically, after generating the surface element, for any surface element, the terminal determines a surface on which the surface element is, determines a position of the surface element relative to the surface and a normal of the surface element, and determines a position of the surface element based on the relative position and a position of an object to which the surface belongs. The terminal obtains a material of the surface, and determines an albedo based on the material, so that the surface element position, a normal, and the albedo of the surface element are obtained. The terminal generates the deep shadow map of the virtual scene based on the light source information of the virtual light source in the virtual scene, determines the surface element lighting information of each surface element based on the generated deep shadow map and a surface element position, a normal, and an albedo of each surface element, and stores the surface element lighting information of each surface element, to directly obtain the surface element lighting information of the target surface element from the stored surface element lighting information of each surface element in a subsequent lighting rendering process. In this way, based on the surface element lighting information of each target surface element, ray tracing may be performed in the form of a surface element, and light may be collected in the form of a surface element, thereby implementing efficient real-time virtual scene rendering for the virtual scene.

In an embodiment, the surface element lighting information includes the direct lighting information and the indirect lighting information. A process of the terminal determining the surface element lighting information of each surface element based on the deep shadow map and the surface element parameter specifically includes the following operations: determining direct lighting information of each surface element based on the deep shadow map; determining light scattered from each surface element based on the direct lighting information and the surface element parameter; performing lighting accumulation on the light scattered from each surface element to obtain indirect lighting information of each surface element; and superimposing the direct lighting information and the indirect lighting information to obtain the surface element lighting information of each surface element. A process the terminal obtaining the surface element lighting information of the target surface element includes the following operations: extracting the surface element lighting information of the target surface element from the surface element lighting information of each surface element, the obtained surface element lighting information being close to surface element lighting information of the real scene. In this way, based on the surface element lighting information of each surface element close to the real scene, ray tracing may be performed in the form of a surface element, and light may be collected in the form of a surface element, thereby implementing efficient real-time virtual scene rendering for the virtual scene.

The light scattered from the surface element refers to light projected outward from the surface element. The light projected outward from the surface element may irradiate on a surface of another object. There may be a plurality of light scattered, and there may be a plurality of surfaces irradiated by the light scattered. In this embodiment of this application, performing lighting accumulation on the light scattered refers to sampling each light scattered from the surface element, and approximating lighting information obtained by sampling to the indirect lighting information of the surface element. Superimposing the direct lighting information and the indirect lighting information refers to combining lighting effects of the two types of lighting information.

Specifically, the terminal performs importance sampling on the light source based on the deep shadow map to determine whether each surface element is directly irradiated by the light source and obtain the direct lighting information of each surface element. For any surface element, a color variance of the surface element is determined based on the direct lighting information and a surface element position, a normal, and an albedo of the surface element, and light scattered of the surface element is determined based on its own color variance. The indirect lighting information of the surface element is obtained by performing lighting accumulation on the light scattered. Then the direct lighting information and the indirect lighting information of the surface element are superimposed to obtain the surface element lighting information of each surface element. The obtained surface element lighting information is surface element lighting information close to the real scene. In this way, based on the surface element lighting information of each surface element close to the real scene, ray tracing may be performed in the form of a surface element, and light may be collected in the form of a surface element, thereby implementing efficient real-time virtual scene rendering for the virtual scene.

The color variance of the surface element refers to a possible range of color variation of the surface element. The color variance may be configured for representing a combined effect of roughness, a diffuse reflection ability, and direct lighting intensity of a surface of an object. To be specific, a greater color variance of the surface element indicates a greater combined effect of roughness, a diffuse reflection ability, and direct lighting intensity of the surface, and more light projected outward from the surface element. In this embodiment of this application, lighting accumulation may be performed on the light scattered that is generated from the surface element within a preset time period. Specifically, after first light scattered from the surface element is determined at a first moment, lighting accumulation is performed on the first light scattered to obtain first indirect lighting information of the surface element, and then a color variance of the surface element is recalculated based on the direct lighting information of the surface element, the first indirect lighting information and the position of the surface element, the normal, and the albedo of the surface element, and second light scattered from the surface element is determined at a second moment based on the re-obtained color variance, lighting accumulation is performed on the second light scattered to obtain second indirect lighting information of the surface element, and then a color variance of the surface element is recalculated based on the direct lighting information, the first indirect lighting information, the second indirect lighting information, and the position of the surface element, the normal, and the albedo of the surface element. By analogy, as time goes by, the color variance of the surface element is reduced, and light projected outward is reduced. Finally, lighting accumulation are performed on multiple indirect lighting information corresponding to the light scattered being projected a plurality of times to obtain the indirect lighting information of the surface element.

In an embodiment, a process of the terminal performing lighting accumulation on the light scattered from each surface element to obtain indirect lighting information of each surface element specifically includes the following operations: determining a projection point reached by the light scattered; determining, from surface elements, a surface element to which the projection point belongs, to obtain a projection surface element; selecting at least one lighting information of the projection surface element, the at least one lighting information being at least one of the direct lighting information or the indirect lighting information; determining, based on the at least one lighting information, regional lighting information of a region where the projection point is located; performing lighting accumulation on the regional lighting information of the region where the projection point is located to obtain the indirect lighting information. The obtained indirect lighting information is indirect lighting information close to the real scene, and surface element lighting information of the surface element close to the real scene is obtained. In this way, based on the surface element lighting information of each surface element close to the real scene, ray tracing may be performed in the form of a surface element, and light may be collected in the form of a surface element, thereby implementing efficient real-time virtual scene rendering for the virtual scene.

The projection point refers to a point at which the light scattered reaches the surface of the object, that is, an intersection of the light scattered and the surface of the object. The projection surface element to which the projection point belongs may specifically refer to a surface element covering the projection point. The virtual scene may alternatively be gridded, and a grid where the projection point is located may be determined as a projection grid, and a surface element covering the projection grid may be determined as a projection surface element. The region where the projection point is located is accumulation of regions corresponding to projection surface elements. For example, if a specific projection point belongs to both a surface element 1 and a surface element 2, the surface element 1 and the surface element 2 are both projection surface elements of the projection point, and a region where the projection point is located is accumulation of regions corresponding to the surface element 1 and the surface element 2. Alternatively, if a specific projection point belongs to a grid 1, at least a part of the grid 1 is covered by a surface element 3, at least another part of the grid 1 is covered by a surface element 4, and at least another part of the grid 1 is covered by a surface element 5, the surface element 3, the surface element 4, and the surface element 5 are all projection surface elements of the projection point, and a region where the projection point is located is accumulation of regions corresponding to the surface element 3, the surface element 4, and the surface element 5.

The regional lighting information of the region where the projection point is located is superposition of the at least one lighting information of each projection surface element of the projection point. For example, if projection surface elements of the projection point are a surface element 1 and a surface element 2, then a superposition result of at least one lighting information of the surface element 1 and at least one lighting information of the surface element 2 is regional lighting information of a region where the projection point is located. When superimposing the lighting information, weighted superposition may be performed based on weights of projection surface elements.

When a real lighting effect is simulated, the to-be-determined indirect lighting information in this application is lighting information generated by simulating light after one or more bounce. Therefore, only one bounce of the light may be simulated, two bounces of the light may be simulated, or a plurality of bounces of the light may be simulated. More simulated bounces of the light indicate a better final rendered lighting effect. When only one bounce of the light is simulated, the to-be-determined indirect lighting information in this application only needs to include primary indirect lighting information. When two bounces of the light are simulated, the to-be-determined indirect lighting information in this application includes primary indirect lighting information and secondary indirect lighting information. By analogy, when a plurality of bounces of the light are simulated, the to-be-determined indirect lighting information in this application includes primary indirect lighting information to multiple indirect lighting information. More simulated bounces of the light indicate a greater amount of needed calculation. Because light decays quickly after bouncing in a scene, one bounce may approximate most of a global lighting effect of a plurality of bounces. In this embodiment of this application, to improve calculation efficiency, only one bounce of the light may be simulated, or two bounces of the light may be simulated.

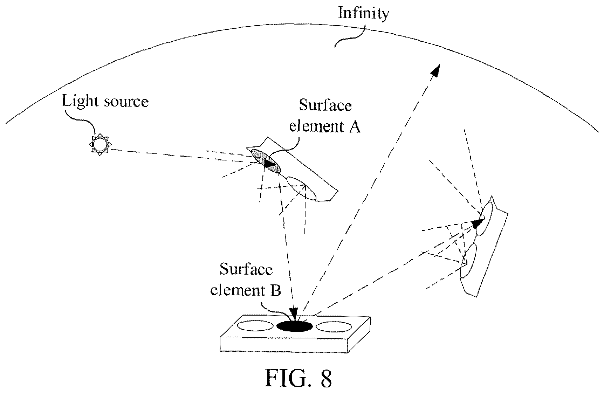

As shown in FIG. 8, a surface element A in the figure is directly irradiated by a light source, and received light is bounced on the surface element A. When the surface element A is a non-smooth plane, a plurality of reflected light may be generated based on the received light. Therefore, when light propagation is simulated based on the surface element, there may be a plurality of light projected outward from the surface element A, and at least a part of the light projected by the surface element may irradiate a surface of another object. The light received from the surface element A may continue to be bounced on the surface of another object. As shown in FIG. 8, specific light scattered from the surface element A irradiates a surface element B on another surface. Lighting accumulation is performed on the light scattered from the surface element A, so that lighting information obtained through accumulation can be approximated to indirect lighting information of the surface element.

Specifically, when the to-be-determined indirect lighting information only needs to include the primary indirect lighting information, the terminal may obtain the direct lighting information of the projection surface element, and determine, based on the direct lighting information of each projection surface element, the regional lighting information of the region where the projection point is located. When the to-be-determined indirect lighting information includes the primary indirect lighting information and the secondary indirect lighting information, the regional lighting information of the region where the projection point is located is determined based on the direct lighting information and the primary indirect lighting information of each projection surface element, or the regional lighting information of the region where the projection point is located is determined only based on the primary indirect lighting information of each projection surface element. For any surface element, after obtaining the regional lighting information of each projection point corresponding to the surface element, the terminal performs lighting accumulation on the regional lighting information of each projection point to obtain the indirect lighting information of the surface element. The obtained indirect lighting information is indirect lighting information close to the real scene, and surface element lighting information of the surface element close to the real scene is obtained. In this way, based on the surface element lighting information of each surface element close to the real scene, ray tracing may be performed in the form of a surface element, and light may be collected in the form of a surface element, thereby implementing efficient real-time virtual scene rendering for the virtual scene.

The region where the projection point is located may be specifically a grid where the projection point is located. Correspondingly, the regional lighting information of the region where the projection point is located refers to grid lighting information of the grid where the projection point is located. The grid lighting information of the grid may be obtained through weighted summation of at least one of the direct lighting information or the indirect lighting information of the surface element covering the grid. A weight of each surface element covering the grid may be determined by the following formula:

$$Contribution = Smoothstep(saturate(N \cdot D) * saturate(1 - \frac{Dist}{radius}))$$ .

In the formula, Contribution refers to a contribution rate of the surface element, that is, a weight of the surface element, N is a normal of the surface element, D is a light direction, Dist is a distance between a surface element center and a light hitting point, the light hitting point is the projection point, radius is a radius of the surface element, smoothstep is a smooth function, and saturate is a normalization function.

As shown in FIG. 8, light is projected from the surface element A to the surface element B. In addition, light is projected from the surface element A to a surface element C and a surface element D. The surface element C and the surface element D are not shown in FIG. 8. If to-be-determined indirect lighting information of the surface element A only includes primary indirect lighting information, a grid B where the surface element B is located, a grid C where the surface element C is located, and a grid D where the surface element D is located are determined, then direct lighting information of a surface element covering the grid B, direct lighting information of a surface element covering the grid C, and direct lighting information of a surface element covering the grid D are obtained, weighted summation is performed on the direct lighting information of the surface element covering the grid B to obtain grid lighting information of the grid B, weighted summation is performed on the direct lighting information of the surface element covering the grid C to obtain grid lighting information of the grid C, and weighted summation is performed on the direct lighting information of the surface element covering the grid D to obtain grid lighting information of the grid D, then primary indirect lighting information of the surface element A is determined based on the grid lighting information of the grid B, the grid lighting information of the grid C, and the grid lighting information of the grid D, and the primary indirect lighting information is determined as indirect lighting information of the surface element A. Similarly, primary indirect lighting information of each surface element is determined based on light projected outward from each surface element. If to-be-determined indirect lighting information of the surface element A includes primary indirect lighting information and secondary indirect lighting information, primary indirect lighting information of each surface element in the virtual scene is first determined by using the foregoing manner, weighted summation is performed on primary indirect lighting information of a surface element covering a grid B to obtain grid lighting information of the grid B, weighted summation is performed on primary indirect lighting information of a surface element covering a grid C to obtain grid lighting information of the grid C, and weighted summation is performed on primary indirect lighting information of a surface element covering a grid D to obtain grid lighting information of the grid D, then secondary indirect lighting information of the surface element A is determined based on the grid lighting information of the grid B, the grid lighting information of the grid C, and the grid lighting information of the grid D, weighted summation is performed on the primary indirect lighting information and the secondary indirect lighting information of the surface element A, and a result of the weighted summation is determined as indirect lighting information of the surface element A. Similarly, secondary indirect lighting information of each surface element is determined based on light projected outward from any surface element, and then indirect lighting information of each surface element including the primary indirect lighting information and the secondary indirect lighting information is obtained.

In an embodiment, the virtual scene is a virtual scene in a video frame. After the terminal generates the surface element, when the video frame in the virtual scene is updated, the terminal may also update the generated surface element. A process of updating the surface element specifically includes the following operations: determining coordinates of each surface element after each surface element is generated; determining new coordinates of each surface element when the video frame is updated; and reclaiming, if a difference between the new coordinates and the coordinates is greater than a preset threshold, a surface element corresponding to the difference. This can avoid using a surface element of a surface of an object not in the virtual scene for lighting rendering, so that a rendering effect of real-time virtual scene rendering for the virtual scene is improved.

The updating of the video frame refers to updating of a scene picture corresponding to the video frame. The reclaiming refers to deleting a surface element that is no longer used, deleting a correspondence associated with a surface element identifier of the deleted surface element, and retaining the surface element identifier of the surface element, to reuse the surface element identifier when a new surface element is subsequently generated. The surface element that is no longer used may be a surface element of a surface of an object not in the virtual scene.

Specifically, after generating the surface element, for any surface element, the terminal determines a surface on which the surface element is, determines a position of the surface element relative to the surface, and determines a position of the surface element based on the relative position and a position of an object to which the surface belongs. The position of the surface element may be specifically coordinates of the surface element. When content of the scene picture of the virtual scene changes, a position of an object on whose surface each surface element is located is re-obtained, and new coordinates of the surface element are re-determined based on the position of the object and the relative position of the surface element and the surface. An difference between the new coordinates and the recorded coordinates of the same surface element is determined, and the difference is compared with a preset threshold. If the difference between the new coordinates and the coordinates is greater than the preset threshold, a surface element corresponding to the difference is reclaimed. The content may be an object in the scene picture and a position and a posture of the object. The determining the difference between the new coordinates and the coordinates is specifically calculating a distance between the new coordinates and the coordinates. If the distance is greater than a preset threshold, a surface element corresponding to the distance is reclaimed. This can avoid using a surface element of a surface of an object not in the virtual scene for lighting rendering, so that a rendering effect of real-time virtual scene rendering for the virtual scene is improved.

In an embodiment, the terminal determines a difference between new coordinates and recorded coordinates of a same surface element, and compares the difference with a preset threshold. If the difference between the new coordinates and the coordinates is not greater than the preset threshold, a surface element parameter of a surface element corresponding to the difference is redetermined, specifically including redetermining a surface element position, a normal, and an albedo of the surface element. The surface element parameter of the surface element corresponding to a difference not greater than the preset threshold is updated, so that utilization of the surface element is improved, and repeated generation of a surface element is avoided, thereby improving rendering efficiency when real-time virtual scene rendering for the virtual scene is performed based on the surface element.

In an embodiment, after the video frame is updated, the terminal may determine an out-of-field surface element in each surface element that is not in an updated scene picture, and start timing. If the out-of-field surface element is still not in the updated scene picture when the timing reaches a preset duration threshold, the out-of-field surface element is reclaimed. A surface element that is not used for a long time is reclaimed, so that a useless surface element may not be repeatedly traversed to occupy computing resources, thereby improving rendering efficiency when real-time virtual scene rendering for the virtual scene is performed based on the surface element.

In an embodiment, after the video frame is updated, the terminal may alternatively obtain a to-be-reclaimed object identifier of a deleted object in the virtual scene, obtain a to-be-reclaimed surface element identifier of the to-be-reclaimed object identifier based on a correspondence between a pre-stored object identifier and the surface element identifier, and reclaim a surface element corresponding to the to-be-reclaimed surface element identifier, so that a useless surface element may not be repeatedly traversed to occupy computing resources, thereby improving rendering efficiency when real-time virtual scene rendering for the virtual scene is performed based on the surface element.

In an embodiment, after the video frame is updated, the terminal may alternatively determine a camera distance from each surface element to a virtual position of a camera. When the camera distance from a specific surface element to the camera is greater than a preset camera distance threshold, the surface element is reclaimed, so that a useless surface element may not be repeatedly traversed to occupy computing resources, thereby improving rendering efficiency when real-time virtual scene rendering for the virtual scene is performed based on the surface element.

In an embodiment, the terminal may alternatively obtain grid surface element coverage of each grid in the virtual scene by the surface element. When there is a target grid of which grid surface element coverage is greater than a preset grid surface element coverage threshold, at least a part of a surface element covering the target grid is reclaimed, so that surface element coverage of the reclaimed target grid is not greater than the preset grid surface element coverage, thereby avoiding a region with excessive concentration of surface elements in the virtual scene, reducing an amount of calculation, and improving rendering efficiency when real-time virtual scene rendering for the virtual scene is performed based on the surface element.

In an embodiment, a process of the terminal reclaiming the surface element specifically includes the following operations: setting a radius of a to-be-reclaimed surface element to 0. In addition, a surface element index corresponding to the surface element may be further reclaimed, so that the surface element index may be used when a new surface element is generated subsequently. This avoids repeated generation of the surface element index, reduces an amount of calculation, and improves rendering efficiency of real-time virtual scene rendering for the virtual scene.

In an embodiment, after a surface element in a current scene picture is updated and reclaimed, a deep shadow map of the current scene picture is regenerated, surface element coverage of each pixel point in the deep shadow map is re-detennined, and it is re-determined, based on the surface element coverage, whether a new incremental surface element needs to be generated, so that ray tracing may be performed in the form of a surface element, and light may be collected in the form of a surface element. This achieves a rendering effect close to reality, and improves calculation efficiency, thereby implementing efficient real-time virtual scene rendering.

In an embodiment, a process of the terminal performing virtual scene rendering on the object in the virtual scene based on the surface element lighting information includes the following operations: determining object lighting information of each object in the virtual scene based on the surface element lighting information; determining lighting data of pixel points of each object based on the object lighting information; and performing lighting rendering on the pixel points of each object based on the lighting data. This achieves a rendering effect close to reality, and improves calculation efficiency, thereby implementing efficient real-time virtual scene rendering.

The lighting data of the pixel points includes reflectivity, lighting intensity, and other information.

Specifically, after collecting the surface element lighting information at each target surface element through the light probe, for any light probe, the terminal determines probe lighting information at the light probe based on the surface element lighting information of the target surface element collected by the light probe, to obtain the probe lighting information at each light probe, and for any object in the virtual scene, determines a target light probe of which a distance to the surface element of the object satisfies a preset distance, determines the object lighting information of the object based on the probe lighting information at each target light probe, determines the lighting data of each pixel point in the object based on the object lighting information, and performs lighting rendering on each pixel point of the object based on the lighting data. This achieves a rendering effect close to reality, and improves calculation efficiency, thereby implementing efficient real-time virtual scene rendering.

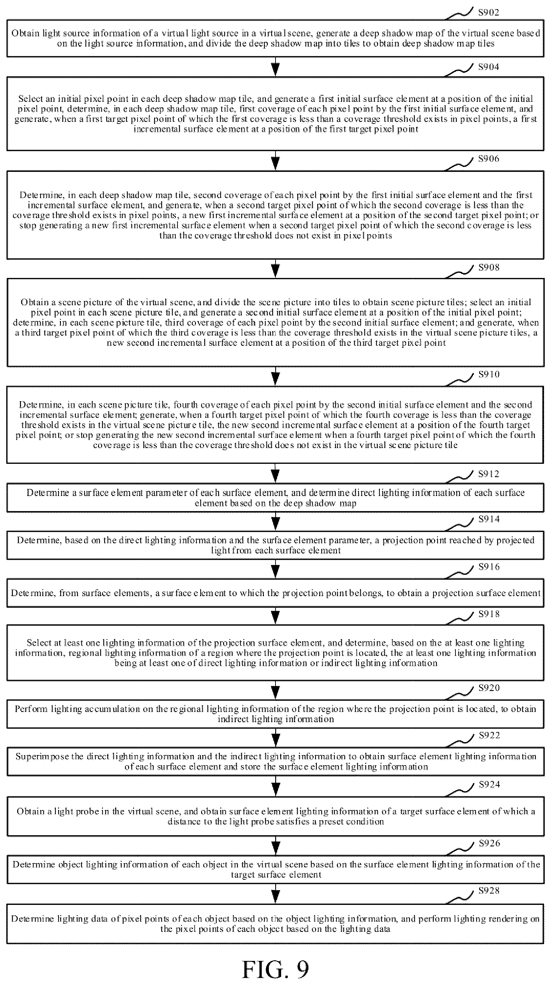

In an embodiment, as shown in FIG. 9, a virtual scene rendering method is provided. An example in which the method is applied to the terminal 102 in FIG. 1 is used for description. The method includes the following operations:

S902: Obtain light source information of a virtual light source in a virtual scene, generate a deep shadow map of the virtual scene based on the light source information, and divide the deep shadow map into tiles to obtain deep shadow map tiles.

S904: Select an initial pixel point in each deep shadow map tile, and generate a first initial surface element at a position of the initial pixel point, determine, in each deep shadow map tile, first coverage of each pixel point by the first initial surface element, and generate, when a first target pixel point of which the first coverage is less than a coverage threshold exists in pixel points, a first incremental surface element at a position of the first target pixel point.

S906: Determine, in each deep shadow map tile, second coverage of each pixel point by the first initial surface element and the first incremental surface element, and generate, when a second target pixel point of which the second coverage is less than the coverage threshold exists in pixel points, a new first incremental surface element at a position of the second target pixel point; or stop generating a new first incremental surface element when a second target pixel point of which the second coverage is less than the coverage threshold does not exist in pixel points.

S908: Obtain a scene picture of the virtual scene, and divide the scene picture into tiles to obtain scene picture tiles; select an initial pixel point in each scene picture tile, and generate a second initial surface element at a position of the initial pixel point; determine, in each scene picture tile, third coverage of each pixel point by the second initial surface element; and generate, when a third target pixel point of which third coverage is less than the coverage threshold exists in the virtual scene picture tiles, a new second incremental surface element at a position of the third target pixel point.

S910: Determine, in each scene picture tile, fourth coverage of each pixel point by the second initial surface element and the second incremental surface element; generate, when a fourth target pixel point of which fourth coverage is less than the coverage threshold exists in the virtual scene picture tile, the new second incremental surface element at a position of the fourth target pixel point; or stop generating the new second incremental surface element when a fourth target pixel point of which fourth coverage is less than the coverage threshold does not exist in the virtual scene picture tile.

S912: Determine a surface element parameter of each surface element, and determine direct lighting information of each surface element based on the deep shadow map.

S914: Determine, based on the direct lighting information and the surface element parameter, a projection point reached by light scattered from each surface element.

S916: Determine, from surface elements, a surface element to which the projection point belongs, to obtain a projection surface element.

S918: Select at least one lighting information of the projection surface element, and determine, based on the at least one lighting information, regional lighting information of a region where the projection point is located, the at least one lighting information being at least one of direct lighting information or indirect lighting information.

S920: Perform lighting accumulation on the regional lighting information of the region where the projection point is located, to obtain indirect lighting information.

S922: Superimpose the direct lighting information and the indirect lighting information to obtain surface element lighting information of each surface element and store the surface element lighting information.

S924: Obtain a light probe in the virtual scene, and obtain surface element lighting information of a target surface element of which a distance to the light probe satisfies a preset condition.

S926: Determine object lighting information of each object in the virtual scene based on the surface element lighting information of the target surface element.

S928: Determine lighting data of pixel points of each object based on the object lighting information, and perform lighting rendering on the pixel points of each object based on the lighting data.

This application further provides an application scenario, and the foregoing virtual scene rendering method is applied in the application scenario. The virtual scene rendering method may be implemented by a rendering engine running on a terminal. The rendering engine may provide a plurality of light source scenes, rendering materials, and dynamic illumination rendering pipelines. The virtual scene rendering method specifically includes the following operations: starting surface element lighting (Surfel Lighting) through console setting of the rendering engine, and the terminal obtains a Surfel Lighting instruction, and starts to obtain light source information of a virtual light source in a virtual scene based on the Surfel Lighting instruction, generates a deep shadow map of the virtual scene based on the light source information, divides the deep shadow map into tiles to obtain deep shadow map tiles, determines, in each deep shadow map tile, surface element coverage of each pixel point by a surface element, generates a surface element based on the surface element coverage, and stops generating a surface element until the surface element coverage of each pixel point is greater than a preset coverage threshold, determines surface element parameter of each surface element, determines direct lighting information of each surface element based on the deep shadow map, determines light scattered from each surface element based on the direct lighting information and the surface element parameter, performs lighting accumulation on the light scattered to obtain indirect lighting information of each surface element, and superimposes the direct lighting information and the indirect lighting information to obtain surface element lighting information of each surface element and stores the surface element lighting information; and enabling surface element tracing (Surfel Traces) of a light probe through the console setting of the rendering engine, and the terminal obtains a light probe in the virtual scene based on a Surfel Traces instruction, obtains surface element lighting information of a target surface element of which a distance to the light probe satisfies a preset condition, determines object lighting information of each object in the virtual scene based on the surface element lighting information of the target surface element, determines lighting data of pixel points in each object based on the object lighting information, and performs lighting rendering on the pixel points of each object based on the lighting data.

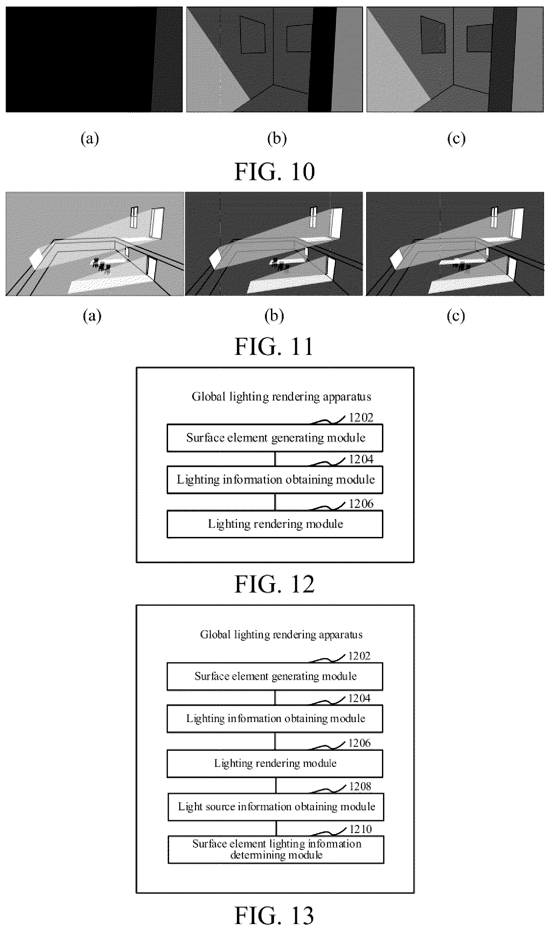

The virtual scene rendering method of this application is compared with other commonly used algorithms. Refer to (a), (b), and (c) in FIG. 10. (a) in FIG. 10 shows a rendering effect of a virtual scene with weak light by using a voxel-based global lighting real-time illumination algorithm (Voxel Lighting), (b) in FIG. 10 shows a rendering effect of a virtual scene with weak light by using the virtual scene rendering method of this application, and (c) in FIG. 10 shows a rendering effect of a virtual scene with weak light by using a virtual scene rendering method based on hardware tracing bakery. It can be learned from the figure, the voxel-based global lighting real-time illumination algorithm renders the virtual scene with weak light too dark, the virtual scene rendering method of this application has a rendering effect for the virtual scene with weak light that is close to an effect of the virtual scene rendering based on hardware tracing bakery, and restores dark details more realistically and is more in line with lighting in the real world, but the virtual scene rendering based on hardware tracing bakery cannot render the virtual scene in real time, and more resources are required to render.

Refer to (a), (b), and (c) in FIG. 11. (a) in FIG. 11 shows a rendering effect of a virtual scene with bright light by using a voxel-based global lighting real-time illumination algorithm (Voxel Lighting), (b) in FIG. 11 shows a rendering effect of a virtual scene with bright light by using the virtual scene rendering method of this application, and (c) in FIG. 11 shows a rendering effect of a virtual scene with bright light by using a virtual scene rendering method based on hardware tracing bakery. It can be learned from the figure, the voxel-based global lighting real-time illumination algorithm renders the virtual scene with bright light too bright, the virtual scene rendering method of this application has a rendering effect for the virtual scene with bright light that is close to an effect of the virtual scene rendering based on hardware tracing bakery, and restores bright details more realistically and is more in line with lighting in the real world, but the virtual scene rendering based on hardware tracing bakery cannot render the virtual scene in real time, and more resources are required to render.

Although operations in flowcharts described in the foregoing embodiments are displayed in sequence as indicated by arrows, these operations are not necessarily performed in sequence as indicated by the arrows. Unless otherwise explicitly specified in this application, execution of the operations is not strictly limited, and the operations may be performed in other sequences. Moreover, at least part of the operations in each embodiment may include a plurality of operations or a plurality of stages. The operations or stages are not necessarily performed at the same moment but may be performed at different moments. Execution of the operations or stages is not necessarily performed in sequence, but may be performed alternately with other operations or at least part of operations or stages of other operations.

Based on the same inventive concept, an embodiment of this application further provides a virtual scene rendering apparatus for implementing the foregoing virtual scene rendering method. An implementation for resolving problems provided in the apparatus is similar to the implementation described in the foregoing method. Therefore, for specific limitations of the following one or more virtual scene rendering apparatus embodiments, reference may be made to the foregoing limitations to the virtual scene rendering method. Details are not described herein again.

In an embodiment, as shown in FIG. 12, a virtual scene rendering apparatus is provided, including: a surface element generating module 1202, a lighting information obtaining module 1204, and a lighting rendering module 1206.

The surface element generating module 1202 is configured to generate a surface element of each object in a virtual scene.

The lighting information obtaining module 1204 is configured to obtain a light probe in the virtual scene, and obtain surface element lighting information of a target surface element of which a distance to the light probe satisfies a preset condition, the target surface element being at least one of the surface element of each object, the surface element lighting information including direct lighting information and indirect lighting information, and the indirect lighting information being obtained by lighting accumulation of light scattered from the target surface element.

The lighting rendering module 1206 is configured to perform virtual scene rendering on the object in the virtual scene based on the surface element lighting information.

In the foregoing embodiment, the surface element of each object in the virtual scene is generated, the light probe in the virtual scene is obtained, and the surface element lighting information of the target surface element of which the distance to the light probe satisfies the preset condition is obtained. The target surface element is at least one of the surface element of each object, the surface element lighting information includes the direct lighting information and the indirect lighting information, and the indirect lighting information is obtained by lighting accumulation of the light scattered from the target surface element. In this way, virtual scene rendering may be performed on the object in the virtual scene based on the surface element lighting information, and ray tracing is performed in the form of a surface element, and light is collected in the form of a surface element. This achieves a rendering effect close to reality, and improves calculation efficiency, thereby implementing efficient real-time virtual scene rendering.

In an embodiment, as shown in FIG. 13, the apparatus further includes: a light source information obtaining module 1208, configured to obtain light source information of a virtual light source in the virtual scene; and a shadow map generating module, configured to generate a deep shadow map of the virtual scene based on the light source information. The surface element generating module 1202 is further configured to: generate the surface element of each object in the virtual scene based on the deep shadow map.

In an embodiment, the surface element includes an initial surface element and an incremental surface element. The surface element generating module 1202 is further configured to: divide the deep shadow map into tiles to obtain deep shadow map tiles; select an initial pixel point in each deep shadow map tile, and generate the initial surface element at a position of the initial pixel point; determine, in each deep shadow map tile, first coverage of each pixel point by the initial surface element; and generate, when a first target pixel point of which the first coverage is less than a coverage threshold exists in pixel points, the incremental surface element at a position of the first target pixel point.

In an embodiment, the surface element generating module 1202 is further configured to: determine, in each deep shadow map tile, second coverage of each pixel point by the surface element; generate, when a second target pixel point of which the second coverage is less than the coverage threshold exists in the pixel points, a new incremental surface element at a position of the second target pixel point; or stop generating a new incremental surface element when a second target pixel point of which the second coverage is less than the coverage threshold does not exist in the pixel points.

In an embodiment, the surface element generating module 1202 is further configured to: determine a surface element parameter of each surface element; and generate the deep shadow map based on the light source information of the virtual light source in the virtual scene. The apparatus further includes: a surface element lighting information determining module 1210, configured to determine the surface element lighting information of each surface element based on the deep shadow map and the surface element parameter.

In an embodiment, the surface element lighting information determining module 1210 is further configured to: determine direct lighting information of each surface element based on the deep shadow map; determine light scattered from each surface element based on the direct lighting information and the surface element parameter; perform lighting accumulation on the light scattered from each surface element to obtain indirect lighting information of each surface element; and superimpose the direct lighting information and the indirect lighting information to obtain the surface element lighting information of each surface element.

In an embodiment, the surface element lighting information determining module 1210 is further configured to: determine a projection point reached by the light scattered; determine, from surface elements, a surface element to which the projection point belongs, to obtain a projection surface element; select at least one lighting information of the projection surface element, the at least one lighting information being at least one of the direct lighting information or the indirect lighting information; determine, based on the at least one lighting information, regional lighting information of a region where the projection point is located; and perform lighting accumulation on the regional lighting information of the region where the projection point is located, to obtain the indirect lighting information.

In an embodiment, the virtual scene is a virtual scene in a video frame. The surface element generating module 1202 is further configured to: determine coordinates of each surface element after each surface element is generated; determine new coordinates of each surface element when the video frame is updated; and reclaim, if a difference between the new coordinates and the coordinates is greater than a preset threshold, a surface element corresponding to the difference.

In an embodiment, the surface element generating module 1202 is further configured to: re-determine, if the difference between the new coordinates and the coordinates is not greater than the preset threshold, a surface element parameter of the surface element corresponding to the difference.

In an embodiment, the lighting rendering module 1206 is further configured to: determine object lighting information of each object in the virtual scene based on the surface element lighting information; determine lighting data of pixel points of each object based on the object lighting information; and perform lighting rendering on the pixel points of each object based on the lighting data.

All or part of the modules in the foregoing virtual scene rendering apparatus may be implemented through software, hardware, or a combination thereof. The foregoing modules may be embedded in hardware form or independent of a processor in a computer device, or may be stored in software form in a memory in the computer device, so that the processor may be called to perform operations corresponding to the foregoing modules.

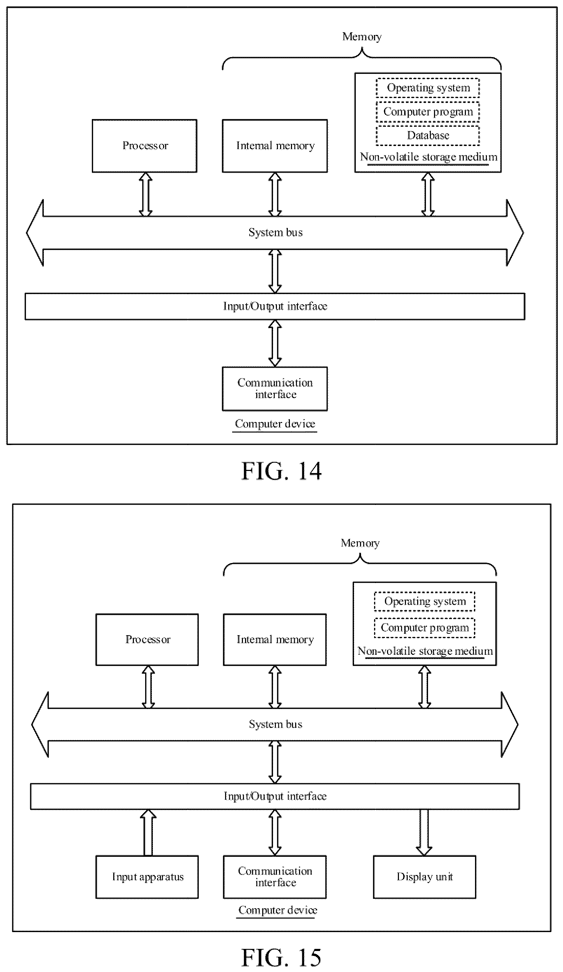

In an embodiment, a computer device is provided. The computer device may be a server. A diagram of an internal structure of the computer device may be shown as FIG. 14. The computer device includes a processor, a memory, an input/output interface (I/O for short), and a communication interface. The processor, the memory, and the input/output interface are connected through a system bus, and the communication interface is connected to the system bus through the input/output interface. The processor of the computer device is configured to provide computing and control capabilities. The memory of the computer device includes a non-volatile storage medium and an internal memory. The non-volatile storage medium has an operating system, a computer program, and a database stored thereon. The internal memory provides a running environment for the operating system and the computer program on the non-volatile storage medium. The database of the computer device is configured to store three-dimensional scene data. The input/output interface of the computer device is configured for information exchange between the processor and an external device. The communication interface of the computer device is configured to communicate with an external terminal through a network connection. The computer program, when executed by the processor, implements a real-time lighting rendering method.

In an embodiment, a computer device is provided. The computer device may be a terminal. A diagram of an internal structure of the computer device is shown as FIG. 15. The computer device includes a processor, a memory, an input/output interface, a communication interface, a display unit, and an input apparatus. The processor, the memory, and the input/output interface are connected through a system bus, and the communication interface, the display unit, and the input apparatus are connected to the system bus through the input/output interface. The processor of the computer device is configured to provide computing and control capabilities. The memory of the computer device includes a non-volatile storage medium and an internal memory. The non-volatile storage medium has an operating system and a computer program stored thereon. The internal memory provides a running environment for the operating system and the computer program on the non-volatile storage medium. The input/output interface of the computer device is configured for information exchange between the processor and an external device. The communication interface of the computer device is used for communication with an external terminal in a wired or wireless manner. The wireless manner may be implemented by using Wi-Fi, a mobile cellular network, near field communication (NFC), or another technology. The computer program, when executed by the processor, implements a real-time lighting rendering method. The display unit of the computer device is configured to form a visible picture, and may be a display screen, a projection apparatus, or a virtual reality imaging apparatus. The display screen may be a liquid crystal display screen or an e-ink display screen. The input apparatus of the computer device may be a touch layer covering the display screen, or may be a button, a trackball, or a touchpad disposed on a housing of the computer device, or may be an external keyboard, touchpad, mouse, or the like.

A person skilled in the art may understand that the structure shown in FIG. 14 or FIG. 15 is merely a block diagram of partial structures related to a solution in this application, and does not constitute a limitation to the computer device to which the solution in this application is applied. Specifically, the computer device may include more or fewer components than those shown in the figure, or have some components combined, or have a different component arrangement.

In an embodiment, a computer device is further provided, including a memory and a processor. The memory has a computer program stored therein, and the processor implements operations in the foregoing method embodiments when executing the computer program.

In an embodiment, a computer-readable storage medium is provided, having a computer program stored thereon. The computer program, when executed by a processor, implements operations in the foregoing method embodiments.

In an embodiment, a computer program product is provided, including a computer program. The computer program, when executed by a processor, implements operations in the foregoing method embodiments.

Data (including but not limited to data used for analysis, stored data, displayed data, and the like), included in this application is information and data that all authorized by a user or fully authorized by all parties. Collection, use, and processing of related data need to comply with relevant laws, regulations, and standards of relevant countries and regions.

A person of ordinary skill in the art may understand that all or some of procedures of the method in the foregoing embodiments may be implemented by instructing relevant hardware by using a computer program. The computer program may be stored in a non-volatile computer-readable storage medium. When the computer program is executed, the procedures of the foregoing method embodiments may be included. Any reference to the memory, database, or another medium used in embodiments provided in this application may include at least one of a non-volatile and a volatile memory. The non-volatile memory may include a read-only memory (ROM), a tape, a floppy disk, a flash memory, an optical memory, a high-density embedded non-volatile memory, a resistive random-access memory (ReRAM), a magnetoresistive random access memory (MRAM), a ferroelectric random access memory (FRAM), a phase change memory (PCM), a graphene memory, or the like. The volatile memory may include a random access memory (RAM) or an external cache memory, or the like. As an illustration but not a limitation, the RAM may be in various forms, such as a static random access memory (SRAM) or a dynamic random access memory (DRAM). The databases in embodiments provided in this application may include at least one of a relational database and a non-relational database. The non-relational database may include a blockchain-based distributed database, and the like. This is not limited herein. The processor in embodiments provided in this application may be a general-purpose processor, a central processing unit, a graphics processor, a digital signal processor, a programmable logic device, a data processing logic device based on quantum computing, and the like. This is not limited herein.

Technical features of the foregoing embodiments may be randomly combined. To make description concise, not all possible combinations of the technical features in the foregoing embodiments are described. However, the combinations of these technical features shall be considered as falling within the scope recorded by this specification provided that no conflict exists.

The foregoing embodiments show only several implementations of this application and are described in detail, which, however, are not to be construed as a limitation to the patent scope of this application. For a person of ordinary skill in the art, several transformations and improvements may be made without departing from the idea of this application. These transformations and improvements fall within the protection scope of this application. Therefore, the protection scope of this application shall be subject to the appended claims.

**Claims**

1. A virtual scene rendering method, performed by a computer device, the method comprising:

   generating at least one surface element for each of at least one object in a virtual scene, thereby generating a surface element set;
   determining, from the surface element set, at least one target surface element for a target object of the at least one object, wherein a distance of each of the at least one target surface element to a corresponding one of at least one light probe in the virtual scene satisfies a preset condition;
   obtaining surface element lighting information of each of the at least one target surface element, the surface element lighting information comprising direct lighting information and indirect lighting information, and the indirect lighting information indicating lighting accumulation of light scattered from respective one of the at least one target surface element; and
   performing virtual scene rendering on the target object in the virtual scene based on the surface element lighting information of each of the at least one target surface element.

2. The method according to claim 1, further comprising:

   obtaining light source information of a virtual light source in the virtual scene; and
   generating a deep shadow map of the virtual scene based on the light source information, and
   the generating at least one surface element for each of at least one object in a virtual scene comprising:
   generating the at least one surface element for each of at least one object in the virtual scene based on the deep shadow map.

3. The method according to claim 2, wherein the at least one surface element comprises an initial surface element and an incremental surface element, and the generating the at least one surface element for each of at least one object in the virtual scene based on the deep shadow map comprises:

   dividing the deep shadow map into tiles to obtain deep shadow map tiles;
   selecting an initial pixel point from pixel points of each deep shadow map tile, and generating the initial surface element at a position of the initial pixel point;
   determining, in each deep shadow map tile, first coverage of each pixel point by the initial surface element; and

generating, when a first target pixel point of which the first coverage is less than a coverage threshold exists in the pixel points, the incremental surface element at a position of the first target pixel point.

4. The method according to claim 3, wherein after the generating the incremental surface element at a position of a first target pixel point, the method further comprises:

determining, in each deep shadow map tile, second coverage of each pixel point by the at least one surface element;
generating, when a second target pixel point of which the second coverage is less than the coverage threshold exists in the pixel points, a new incremental surface element at a position of the second target pixel point; and
stopping generating a new incremental surface element when a second target pixel point of which the second coverage is less than the coverage threshold does not exist in the pixel points.

5. The method according to any one of claims 1 to 4, further comprising:

determining a surface element parameter of each surface element;
generating the deep shadow map based on the light source information of the virtual light source in the virtual scene; and
determining surface element lighting information of each surface element based on the deep shadow map and the surface element parameter, and
the obtaining surface element lighting information of each of the at least one target surface element comprising:
extracting the surface element lighting information of each of the at least one target surface element from the surface element lighting information of each surface element.

6. The method according to claim 5, wherein the determining surface element lighting information of each surface element based on the deep shadow map and the surface element parameter comprises:

determining direct lighting information of each surface element based on the deep shadow map;
determining light scattered from each surface element based on the direct lighting information and the surface element parameter;
performing lighting accumulation on the light scattered from each surface element to obtain indirect lighting information of each surface element; and
superimposing the direct lighting information and the indirect lighting information to obtain the surface element lighting information of each surface element.

7. The method according to claim 6, wherein the performing lighting accumulation on the light scattered from each surface element to obtain indirect lighting information of each surface element comprises:

determining a projection point reached by the light scattered;
determining, from surface elements, a surface element to which the projection point belongs, to obtain a projection surface element;
selecting at least one lighting information of the projection surface element, the at least one lighting information being at least one of the direct lighting information or the indirect lighting information;
accumulating the at least one lighting information of projection surface elements to obtain regional lighting information of a region where each projection point is located; and
performing lighting accumulation on the regional lighting information of the region where each projection point is located, to obtain the indirect lighting information.

8. The method according to any one of claims 1 to 7, wherein the virtual scene is a virtual scene in a video frame, and the method further comprises:

determining coordinates of each surface element after each surface element is generated;
determining new coordinates of each surface element when the video frame is updated; and
reclaiming, if a difference between the new coordinates and the coordinates is greater than a preset threshold, a surface element corresponding to the difference.

9. The method according to claim 8, further comprising:
re-determining, if the difference between the new coordinates and the coordinates is not greater than the preset threshold, a surface element parameter of the surface element corresponding to the difference.

10. The method according to any one of claims 1 to 9, wherein the performing virtual scene rendering on the target object in the virtual scene based on the surface element lighting information of each of the at least one target surface element comprises:

determining object lighting information of each object in the virtual scene based on the surface element lighting information;
determining lighting data of pixel points of each object based on the object lighting information; and
performing virtual scene rendering on the pixel points of each object based on the lighting data.

11. The method according to claim 10, wherein the determining object lighting information of each object in the virtual scene based on the surface element lighting information comprises:

determining probe lighting information at each light probe based on the surface element lighting information;
determining a target light probe of which a distance to the object satisfies a preset distance; and
determining the object lighting information of the object based on probe lighting information of the target light probe of light probes.

12. The method according to any one of claims 1 to 11, wherein the light probe is a light probe pre-placed in the virtual scene.

13. The method according to any one of claims 1 to 13, wherein the indirect lighting information comprises at least one of primary indirect lighting information, secondary indirect lighting information, or multiple indirect lighting information.

14. A virtual scene rendering apparatus, comprising:

a surface element generating module, configured to generate at least one surface element for each of at least one object in a virtual scene, thereby generating a surface element set;
a lighting information obtaining module, configured to determine, from the surface element set, at least one target surface element for a target object of the at least one object, wherein a distance of each of the at least one target surface element to a corresponding one of at least one light probe in the virtual scene satisfies a preset condition; and obtain surface element lighting information of each of the at least one target surface element, the surface element lighting information comprises direct lighting information and indirect lighting information, and the indirect lighting information indicates lighting accumulation of light scattered from respective one of the at least one target surface element; and
a lighting rendering module, configured to perform virtual scene rendering on the target object in the virtual scene based on the surface element lighting information of each of the at least one target surface element.

15. The apparatus according to claim 14, further comprising:

a light source information obtaining module, configured to obtain light source information of a virtual light source in the virtual scene; and
a shadow map generating module, configured to generate a deep shadow map of the virtual scene based on the light source information, and
the surface element generating module being further configured to:
generate the at least one surface element for each of at least one object in the virtual scene based on the deep shadow map.

16. A computer device, comprising a memory and a processor, the memory having computer-readable instructions stored therein, the processor, when executing the computer-readable instructions, implementing operations of the method according to any one of claims 1 to 13.

17. A computer-readable storage medium, having computer-readable instructions stored thereon, the computer-readable instructions, when executed by a processor, implementing operations of the method according to any one of claims 1 to 13.

18. A computer program product, comprising computer-readable instructions, the computer-readable instructions, when executed by a processor, implementing operations of the method according to any one of claims 1 to 13.

FIG. 1

S202

Generate a surface element of each object in a virtual scene

S204

Obtain a light probe in the virtual scene, and obtain surface element lighting information of a target surface element of which a distance to the light probe satisfies a preset condition

S206

Perform global lighting rendering on the object in the virtual scene based on the surface element lighting information

FIG. 2

FIG. 3A

FIG. 3B

FIG. 3C

FIG. 4

FIG. 5

FIG. 6

FIG. 7

FIG. 8

S902

Obtain light source information of a virtual light source in a virtual scene, generate a deep shadow map of the virtual scene based on the light source information, and divide the deep shadow map into tiles to obtain deep shadow map tiles

S904

Select an initial pixel point in each deep shadow map tile, and generate a first initial surface element at a position of the initial pixel point, determine, in each deep shadow map tile, first coverage of each pixel point by the first initial surface element, and generate, when a first target pixel point of which the first coverage is less than a coverage threshold exists in pixel points, a first incremental surface element at a position of the first target pixel point

S906

Determine, in each deep shadow map tile, second coverage of each pixel point by the first initial surface element and the first incremental surface element, and generate, when a second target pixel point of which the second coverage is less than the coverage threshold exists in pixel points, a new first incremental surface element at a position of the second target pixel point; or stop generating a new first incremental surface element when a second target pixel point of which the second coverage is less than the coverage threshold does not exist in pixel points

S908

Obtain a scene picture of the virtual scene, and divide the scene picture into tiles to obtain scene picture tiles; select an initial pixel point in each scene picture tile, and generate a second initial surface element at a position of the initial pixel point; determine, in each scene picture tile, third coverage of each pixel point by the second initial surface element; and generate, when a third target pixel point of which the third coverage is less than the coverage threshold exists in the virtual scene picture tiles, a new second incremental surface element at a position of the third target pixel point

S910

Determine, in each scene picture tile, fourth coverage of each pixel point by the second initial surface element and the second incremental surface element; generate, when a fourth target pixel point of which the fourth coverage is less than the coverage threshold exists in the virtual scene picture tile, the new second incremental surface element at a position of the fourth target pixel point; or stop generating the new second incremental surface element when a fourth target pixel point of which the fourth coverage is less than the coverage threshold does not exist in the virtual scene picture tile

S912

Determine a surface element parameter of each surface element, and determine direct lighting information of each surface element based on the deep shadow map

S914

Determine, based on the direct lighting information and the surface element parameter, a projection point reached by projected light from each surface element

S916

Determine, from surface elements, a surface element to which the projection point belongs, to obtain a projection surface element

S918

Select at least one lighting information of the projection surface element, and determine, based on the at least one lighting information, regional lighting information of a region where the projection point is located, the at least one lighting information being at least one of direct lighting information or indirect lighting information

S920

Perform lighting accumulation on the regional lighting information of the region where the projection point is located, to obtain indirect lighting information

S922

Superimpose the direct lighting information and the indirect lighting information to obtain surface element lighting information of each surface element and store the surface element lighting information

S924

Obtain a light probe in the virtual scene, and obtain surface element lighting information of a target surface element of which a distance to the light probe satisfies a preset condition

S926

Determine object lighting information of each object in the virtual scene based on the surface element lighting information of the target surface element

S928

Determine lighting data of pixel points of each object based on the object lighting information, and perform lighting rendering on the pixel points of each object based on the lighting data

## FIG. 9

(a)　　　　　　　　　　(b)　　　　　　　　　　(c)

FIG. 10

(a)　　　　　　　　　　(b)　　　　　　　　　　(c)

FIG. 11

FIG. 12

FIG. 13

Memory

Operating system

Computer program

Database

Non-volatile storage medium

Processor

Internal memory

System bus

Input/Output interface

Communication
interface

Computer device

FIG. 14

Memory

Operating system

Computer program

Non-volatile storage medium

Processor

Internal memory

System bus

Input/Output interface

Input apparatus

Communication
interface

Display unit

Computer device

FIG. 15

## INTERNATIONAL SEARCH REPORT

| International application No. |
| --- |
| **PCT/CN2023/129364** |

**A.    CLASSIFICATION OF SUBJECT MATTER**

G06T 15/00(2011.01)i

According to International Patent Classification (IPC) or to both national classification and IPC

**B.    FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 全局, 光照, 渲染, 贴图, 阴影, 面元, 表面, 光源, 覆盖, 映射, 匹配, 像素; global, light source, illumination, render, shade, map, surface, match, cover, pixel

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 115830208 A (TENCENT TECHNOLOGY (SHENZHEN) CO., LTD.) 21 March 2023 (2023-03-21) claims 1-15, and description, paragraphs [0027]-[0106] | 1-18 |
| X | CN 112927341 A (TENCENT TECHNOLOGY (SHENZHEN) CO., LTD.) 08 June 2021 (2021-06-08) claims 14-15, and description, paragraphs [0066]-[0233], and figures 2-11 | 1-2, 5, 8-18 |
| A | CN 109993823 A (TENCENT TECHNOLOGY (SHENZHEN) CO., LTD.) 09 July 2019 (2019-07-09) entire document | 1-18 |
| A | CN 111311723 A (TENCENT TECHNOLOGY (SHENZHEN) CO., LTD.) 19 June 2020 (2020-06-19) entire document | 1-18 |
| A | CN 115546389 A (NETEASE (HANGZHOU) NETWORK CO., LTD.) 30 December 2022 (2022-12-30) entire document | 1-18 |

☑ Further documents are listed in the continuation of Box C.          ☑ See patent family annex.

| | |
| --- | --- |
| * Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **09 December 2023** | **05 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/129364**

C.      DOCUMENTS CONSIDERED TO BE RELEVANT

| Category* | Citation of document, with indication, where appropriate, of the relevant passages | Relevant to claim No. |
|---|---|---|
| A | EP 0856815 A2 (MICROSOFT CORP.) 05 August 1998 (1998-08-05)<br>entire document | 1-18 |

<table>
<tr><td colspan="2">**INTERNATIONAL SEARCH REPORT**<br>Information on patent family members</td><td colspan="2">International application No.<br>**PCT/CN2023/129364**</td></tr>
</table>

| Patent document cited in search report | | | Publication date (day/month/year) | Patent family member(s) | | | Publication date (day/month/year) |
|---|---|---|---|---|---|---|---|
| CN | 115830208 | A | 21 March 2023 | None | | | |
| CN | 112927341 | A | 08 June 2021 | None | | | |
| CN | 109993823 | A | 09 July 2019 | US | 2021279948 | A1 | 09 September 2021 |
| | | | | US | 11574437 | B2 | 07 February 2023 |
| | | | | US | 2023143323 | A1 | 11 May 2023 |
| | | | | JP | 2022527686 | A | 03 June 2022 |
| | | | | JP | 7190042 | B2 | 14 December 2022 |
| | | | | WO | 2020207202 | A1 | 15 October 2020 |
| | | | | EP | 3955212 | A1 | 16 February 2022 |
| | | | | EP | 3955212 | A4 | 15 June 2022 |
| CN | 111311723 | A | 19 June 2020 | WO | 2021147408 | A1 | 29 July 2021 |
| | | | | JP | 2023501102 | A | 18 January 2023 |
| | | | | JP | 7381738 | B2 | 15 November 2023 |
| | | | | KR | 20220043157 | A | 05 April 2022 |
| | | | | EP | 4071723 | A1 | 12 October 2022 |
| | | | | EP | 4071723 | A4 | 07 June 2023 |
| | | | | US | 2022207820 | A1 | 30 June 2022 |
| CN | 115546389 | A | 30 December 2022 | None | | | |
| EP | 0856815 | A2 | 05 August 1998 | CA | 2227502 | A1 | 31 July 1998 |
| | | | | CA | 2227502 | C | 13 June 2006 |
| | | | | EP | 0856815 | A3 | 07 January 1999 |
| | | | | EP | 0856815 | B1 | 12 October 2005 |
| | | | | DE | 69831822 | D1 | 17 November 2005 |
| | | | | DE | 69831822 | T2 | 13 July 2006 |
| | | | | JPH | 113436 | A | 06 January 1999 |
| | | | | JP | 4111577 | B2 | 02 July 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023100239045